# EUROPÄISCHE PATENTSCHRIFT

(11) **EP 1 701 812 B1**
(45) Veröffentlichungstag und Bekanntmachung des Hinweises auf die Patenterteilung: **19.08.2009**
(21) Anmeldenummer: 04820953.0
(22) Anmeldetag: 21.12.2004
(51) Int. Cl.: B21J 15/10, B23P 19/04, B23Q 1/01

(54) **MONTAGEEINRICHTUNG ZUM VERBINDEN VON SCHALENFÖRMIGEN LÄNGSSEGMENTEN EINES MANTELKÖRPERS DURCH ANBRINGEN WENIGSTENS EINER LÄNGS-VERBINDUNGSNAHT**
ASSEMBLY DEVICE FOR CONNECTING CUP-SHAPED LONGITUDINAL SEGMENTS OF A COVERING BODY BY PLACING AT LEAST ONE LONGITUDINAL CONNECTING JOINT
DISPOSITIF DE MONTAGE POUR RELIER DES SEGMENTS LONGITUDINAUX EN FORME DE CUVETTE, D'UN CORPS D'ENVELOPPE, PAR APPLICATION D'AU MOINS UN CORDON DE LIAISON LONGITUDINAL

(30) Priorität: 30.12.2003 DE 10361594
(43) Veröffentlichungstag der Anmeldung: 20.09.2006
(60) Teilanmeldung: 09162152.4
(73) Patentinhaber: Airbus Deutschland GmbH, 21129 Hamburg (DE)
(72) Erfinder: WESSELOH, Reiner, 21224 Rosengarten - Klecken (DE)
(74) Vertreter: Kopf, Korbinian Paul
(86) Internationale Anmeldenummer: PCT/EP2004/014537
(87) Internationale Veröffentlichungsnummer: WO 2005/065864

(56) Entgegenhaltungen:
- EP-A- 0 483 947
- WO-A-99/37429

## Beschreibung

Die Erfindung betrifft eine Montageeinrichtung zum Verbinden von schalenförmigen Mantel-Längssegmenten eines ein Großbauteil bildenden, sich lang erstreckenden, einen Hohlraum mit offener Stirnseite bestimmenden, insbesondere umfangsseitig geschlossenen Mantelkörpers durch Anbringen wenigstens einer Längs-Verbindungsnaht am Körpermantel, umfassend wenigstens ein Werkzeugpaar, das ein in Längsrichtung des Mantelkörpers innerhalb des Hohlraums verfahrbar geführtes inneres Werkzeug sowie ein in Längsrichtung des Mantelkörpers außerhalb des Hohlraums verfahrbar geführtes äußeres Werkzeug aufweist, wobei die Werkzeuge im Paar in Richtung quer zur Körperlängsrichtung zum Herstellen der Verbindungsnaht zusammenwirken. Typischerweise handelt es sich bei den Mantelkörpern um Flugzeugrümpfe; die aus einer Mehrzahl von teil-zylindrischen vorgefertigten Schalensegmenten montiert werden. Die Segmente werden in den Rumpf bestimmende Positionen gesetzt und mit Nietnähten längsweise aneinander gefügt. Zur Herstellung der Nietnähte kommt eine Gruppe von Werkzeugen zum Einsatz, die an verfahrbaren Werkzeugeinheiten angeordnet sind. Solche Einheiten umfassen zum Beispiel Bohr-, Senk-, Dichtungs-, Steck-, Preß- und Gegenhaltewerkzeuge. Allgemein kann die Einrichtung mit beliebigen Werkzeugen zum Herstellen von Verbindungsnähten oder zum Bearbeiten von entsprechenden Verbindungsstellen ausgestattet werden.

Eine Montageeinrichtung gemäss Oberbegriff des Anspruchs 1 ist aus WO 99/37429 bekannt.

Eine zum Beispiel aus US 4 662 556 bekannte gattungsgemäße automatische Montageeinrichtung umfaßt Werkzeugeinheiten tragende Gestellwagen, die auf Schienen in Rumpf-Längsrichtung verfahrbar angeordnet sind. Mit der stationären Gestellwagen-Einrichtung lassen sich Nietnähte im wesentlichen nur in einer Umfangs-Höhenposition setzen, so daß der zu fertigende Rumpfkörper verlagert werden muß, um ihn mit weiteren Segmenten zu vervollständigen. Eine andere aus US 4 662 556 bekannte, Nietverbindungen herstellende Montageeinrichtung weist ein entsprechend der Umfangskontur des Rumpfes geformtes Schienengerüst auf. An bogenförmigen Schienenabschnitten laufen Wagen, die einen ein Außenwerkzeug tragenden, über die Rumpflänge sich erstreckenden Balken führen und verfahren. Zum Bearbeiten einer Nietnaht in einer Umfangs-Höhenposition wird der Längsbalken am Rumpf befestigt, und Niet-Gegenwerkzeuge im Rumpfinneren werden über durch die Rumpfschale gesetzte Stifte mit dem Längsbalken verbunden. In das zu fertigende Bauteil werden unerwünscht Kräfte eingeleitet. Zwar können mit der Montageeinrichtung Längs-Nietnähte an unterschiedlichen Umfangspositionen eines Halb-Rumpfes hergestellt werden, jedoch sind Rüsten und Umrüsten besonders zeit- und arbeitsaufwenig. Die gebogene Schienenführung ist in Abhängigkeit von Dimension und Form des herzustellenden Flugzeugrumpfes zu konstruieren, so daß die Einrichtung nur für einen einzigen Bautyp errichtet und genutzt werden kann. Die Gesamtkonstruktion ist aufwendig und erlaubt nur die Erfassung eines halben Rumpfumfangs.

Der Erfindung liegen die Ziele zugrunde, eine automatische Montageeinrichtung der beschriebenen Art zu schaffen, die relativ einfach bauen und zum Herstellen von längssegmentierten Mantelkörpern unterschiedlicher Durchmesser bzw. Formen einsetzbar sein soll, wobei Längs-Verbindungsnähte in möglichst großem Umfangswinkelbereich am Körpermantel in gewünschter Umfangsposition bearbeitet und hergestellt werden sollen. Rüst- und Montageaufwand sollen verringert und entsprechend Zeit- und Kostenaufwand der Herstellung reduziert werden.

Die Ziele der Erfindung werden durch eine Montageeinrichtung mit den Merkmalen des Anspruchs 1 erreicht.

Die Montageeinrichtung umfasst ein Trägerpaar, das durch einen im Hohlraum des Mantelkörpers sich in Längsrichtung erstreckenden, das innere Werkzeug verfahrbar führenden inneren Führungsträger sowie durch einen außerhalb des Mantelkörpers sich in Längsrichtung erstreckenden, das äußere Werkzeug verfahrbar führenden äußeren Führungsträger gebildet ist, wobei jeder Führungsträger um wenigstens eine nach Maßgabe äußerer Längskontur des Mantelkörpers orientierte Längs-Drehachse rotatorisch sowie in wenigstens zwei separate, quer zur Längsrichtung verlaufende Raumrichtungen verschiebbar derart gelagert und feststellbar ist, daß zum Herstellen der Verbindungsnaht zusammenwirkende Werkzeuge im Paar wahlweise unterschiedliche Positionen am Längsumfang des Mantelkörpers einnehmen.

Weiter ist die Einrichtung mit einer inneren Portaleinrichtung und einer äußeren Portaleinrichtung vorgesehen. Die innere Portaleinrichtung lagert wenigstens einen inneren Führungsträger, und die äußere Portaleinrichtung lagert wenigstens einen äußeren Führungsträger, wobei der innere Führungsträger um eine Längs-Drehachse der inneren Portaleinrichtung und der äußere Führungsträger um eine zweckmäßig mit der inneren Portal-Längsdrehachse parallele Län s-Drehachse der äußeren Portaleinrichtung drehverstellbar ist.

In bevorzugter erfindungsgemäßen herstellung umfassen jeweils die inner Portaleinrichtung und die äußere Portaleinrichtung zwei säulenartige Gestellteile, jeweils zwischen denen der zugeordnete Portalträger angeordnet und an denen er gelagert ist, wobei die säulenartigen Gestellteile jeder Portaleinrichtung in wenigstens einer ersten Raumrichtung quer zur Längsrichtung des Mantelkörpers verfahrbar sowie feststellbar angeordnet sind und Drehlager tragen, die jeweils den Portalträger lagern und in wenigstens einer zweiten Raumrichtung quer zur Längsrichtung des Mantelkörpers in der Säulenhöhe der Gestellteile verstellbar sind.

Um einen umfangsseitig geschlossenen, vorgefertigten Mantelkörper oder einen Teil desselben von einer Stirnseite her in die Montageeinrichtung zu bringen bzw. diesen dort zu entnehmen, besteht eine weitere erfindungsgemäße Ausgestaltung darin, daß die innere Portaleinrichtung ein erstes säulenartiges Gestellteil aufweist, an dem der innere Portalträger in Richtung der Säulenhöhe schwenkbar gelagert ist. Die Portaleinrichtung weist auch ein zweites säulenartiges Gestellteil auf, an dem der innere Portalträger zur Schwenkabhebung abhebbar gelagert ist wobei das zweite säulenartige Gestellteil soweit quer zur Längsrichtung des Mantelkörpers verfahrbar ist, daß der stirnseitige Raum vor dem inneren Portalträger freigegeben wird.

Mittel können auch vorgesehen werden, um Längsnähte an Abschnitten mit unterschiedlicher Längskontur bzw. mit unterschiedlichen Querschnittsprofilen anzubringen. Zu diesem Zweck werden an den genannten säulenartigen Gestellteilen der inneren Portalträgereinrichtung und der äußeren Portalträgereinrichtung in der Höhe verstellbare und festsetzbare Traglager für die Portalträger derart angeordnet, daß letztere in Parallellage zueinander wahlweise in wenigstens zwei, den unterschiedlichen Längskonturen anpaßbare Positionen versetzbar sind.

Die im Paar gegeneinander arbeitenden Werkzeuge sind durch Drehung um zugehörige Längsachse sowie durch voneinander unabhängige Verschiebungen in wenigstens zwei Richtungen quer zur Körper-Längsachse in gewünschte Umfangsposition am Mantel des herzustellenden Körper verfahrbar. Durch Drehverstellung der Werkzeug-Führungsträger lassen sich die Werkzeuge in der gewünschten Höhen-/Umfangsposition mit ihren Arbeitsachsen auf den Bereich zu verbindender Mantelsegmente ausrichten, wobei zumeist eine 90°-Ausrichtung vorgesehen wird. Insbesondere arbeiten Nietwerkzeuge in Arbeitsausrichtung mit 90°-Winkel zur Mantelfläche an der Nahtstelle. Die erfindungsgemäße Einrichtung ist für diese Anwendung besonders geeignet, da die Utnfangs-/Höhenpositionen translatorisch und die Arbeitswinkelpositionen rotatorisch ohne gegenseitige Beeinflussung einrichtbar sind. Man erkennt, daß die Einrichtung universell zum Herstellen von Mantel-Hohlkörpern unterschiedlichster Größen und Querschnittsformen einsetzbar ist, da sich das Werkzeugpaar oder die Werkzeugpaare praktisch in jede beliebige Höhen- und Umfangsposition bewegen lassen. Insbesondere läßt sich ein und dieselbe Montageeinrichtung zum Herstellen von Rümpfen unterschiedlicher Flugzeugtypen vorsehen. Für jeden Größen- und/oder Formtyp zu konstruierende Einrichtungen entfallen. Maschinenkosten, Rüst- und Montagekosten sowie Fertigungszeiten werden erheblich reduziert. Zudem läßt sich der Automatisierungsgrad zur Herstellung von Hohl-Mantelkörpern mit Segmentteilen erhöhen, da Verbindungsnähte mit freien Werkzeugen auf ein und dieselbe Weise hergestellt werden. Herkömmliche manuelle Einrichtungs- und Montagearbeiten entfallen.

Gemäß der Erfindung ist jeder Werkzeug-Führungsträger rotatorisch um zugehörige Längs-Drehachse sowie translatorisch in zwei separate, senkrecht zueinander stehende transversale Richtungen verlagerbar. So lassen sich die Werkzeuge Richtung für Richtung in Y- und Z-Richtung eines kartesischen Koordinatensystems in gewünschte Höhen- und Umfangsposition bringen und durch Drehverstellung zum Ausrichten ihrer Arbeitsachsen präzise zur Fläche der zu verbindenden Mantelsegmente einstellen.

Die erfindungsgemäße Einrichtung läßt sich besonders vorteilhaft zum Herstellen von Körpern einsetzen, deren Längssegmente teil-zylindrisch sind. Auch Mantel-Hohlkörper mit vom Zylinderquerschnitt abweichendem Querschnitt lassen sich ohne weiteres fertigen. Insbesondere können auch Körper mit sich änderndem Profilquerschnitt, insbesondere mit konischen Längsabschnitten hergestellt werden. Zu diesem Zweck werden die Werkzeug-Führungsträger so gelagert, daß sie um Längs-Drehachsen drehbar sind, die entsprechend unterschiedlichen äußeren Längskonturen des Mantelkörpers orientiert sind.

Die im Paar gegeneinander arbeitenden Werkzeuge sind mit optimalem Kräfteausgleich gegeneinander abgestützt. Einerseits können Werkzeuge mit relativ hohen Kräften beaufschlagt werden. Dies ist von besonderem Vorteil beim Einsatz von Quetschwerkzeugen, die Duralniete od. dgl. Niete fügen, um Krafteinleitung in zu verbindende Bauteile zu vermeiden. Insoweit haben Duralniete auch den Vorteil, daß sie kostengünstig zur Verfügung stehen, keine Paßbohrungen benötigt werden und die Toleranz des Toolcenterpoints relativ groß ist. Damit lassen sich bei der Herstellung hohe Nietraten erreichen. Andererseits lassen sich Bauteile wie der Trägerrahmen, ihn haltende Lager, Gestellteile und/oder Werkzeugträgerköpfe geringer dimensionieren. Dadurch, daß die Werkzeug-Führungsträger in den Trägerrahmen integriert sind, ist auch die Gesamtkonstruktion relativ einfach. Ein den Trägemahmen lagerndes Gestell sowie die Lagerung sind raumsparend mit minimaler Anzahl von Bauteilen angeordnet.

Insbesondere lassen sich Verbindungsnähte an umfangsseitig vollständig geschlossenen Mantelkörpern anbringen. Dies gelingt auch mit geschlossenem Trägerrahmen. Ein solcher Trägerrahmen weist an seinen stirnseitigen Enden die beiden Führungsfräger verbindende Rahmenstege auf, die um wenigstens eine Längsachse des Trägerrahmens drehbar gelagert sind, und an wenigstens einem Rahmenende ist der Rahmensteg lösbar mit den Rahmen-Führungsträgern verbunden, so daß er im gelösten Zustand in eine stirnseitigen Raum vor dem inneren Führungsträger freigebende Position bewegbar ist. Zweckmäßig kann der Trägerrahmen dadurch geöffnet werden, daß der lösbare Rahmensteg vollständig von dem Rahmen abtrennbar und mittels eines säulenartigen Gestellteils in eine Position verfahrbar ist, die freien Raum beläßt, um den stirnseitig offenen und umfangsseitig geschlossenen Mantelkörper in vorgefertigter Form oder einen Teil desselben von einer Stirnseite her in die Vorrichtung zu bringen bzw. dieser dort zu entnehmen. Zweckmäßig wird der Trägerrahmen an seinem geschlossen bleibenden stirnseitigen Ende mit einer Gewichtsmasse versehen, die ein Ausgleichsgewicht erzeugt, um den Trägerrahmen im Zustand des vollständig von den Rahmenfühnmgsträgen abgetrennten Rahmensteges in Position zu halten.

Um eine Längsnaht auch an im Profilquerschnitt sich ändernden Mantelkörpern anbringen zu können, mag der Trägerrahmen derart gelagert sein, daß er wahlweise in wenigstens zwei Positionen versetzbar ist, in denen die Rahmenführungsträger jeweils entsprechend unterschiedlicher äußere Längskontur des Mantelkörpers ausgerichtet sind. Vorteilhaft wird eine den Trägerrahmen lagernde Lagereinrichtung vorgesehen, die an den Rahmenstegen in deren Erstreckungsrichtung gekrümmt ausgebildete, z. B. konvexe Lagerabschnitte sowie diese aufnehmende korrespondierende, z. B. konkave Lagerabschnitte aufweist.

Um hinsichtlich Bauform und größe eine besonders günstige Einrichtung mit die Werkzeug-Führungsträger integrierendem Trägerrahmen zu schaffen, werden zwei säulenartige Gestellteile vorgesehen, zwischen denen der Trägerrahmen angeordnet und an denen er um eine Längsachse drehbar gelagert ist. Die säulenartigen Gestellteile sind in wenigstens einer ersten Raumrichtung quer zur Längsrichtung des Mantelkörpers insbesondere auf Schienen gemeinsam verfahrbar angeordnet. Um den Rahmenträger besonders einfach höhenverstellbar zu lagern, Mögen die säulenartigen Gestellteile Lager tragen, die den Rahmenträger lagern und in Raumrichtung quer zur Längsrichtung des Mantelkörpers in der Säulenhöhe der Gestellteile verstellbar sind.

Unteransprüche sind auf die genannten und noch andere zweckmäßige und vorteilhafte Ausgestaltungen der Erfindung gerichtet. Besonders zweckmäßige und vorteilhafte Ausbildungsformen oder möglichkeiten der Erfindung werden anhand der folgenden Beschreibung der in der schematischen Zeichnung dargestellten Ausführungsbeispiele näher beschrieben. Es zeigen
- Fig. 1 und 2: in Längsansicht eine nicht erfindungsgemäße Montageeinrichtung mit Rahmenträger,
- Fig. 3: in Draufsicht eine Rüstposition der Montageeinrichtung der Fig. 1 und 2,
- Fig. 4 und 5: in Längs- bzw. Draufsicht die Montageeinrichtung der Fig. 1 bis 3 in einer Einstellposition,
- Fig. 6A bis 6C: in Stirnansicht Einstellpositionen der Montageeinrichtung der Fig. 1 bis 5,
- Fig. 7: in Profilansicht Werkzeug-Einstellpositionen Montageeinrichtungen am Umfang unterschiedlicher Mantel-Hohlkörper,
- Fig. 8 und 9: in Längsansicht und Draufsicht ein Ausführungsbeispiel der erfindungsgemäßen Montageeinrichtung,
- Fig. 10 und 11: in Längsansicht und Draufsicht eine Rüstposition der Montageeinrichtung der Fig. 8 und 9,
- Fig. 12A bis 12 C: in Stirnansicht Einstellpositionen der Montageeinrichtung der Fig. 8 bis 11 und
- Fig. 13: in Längsansicht eine Einstellposition der Montageeinrichtung der Fig. 8 bis 12.

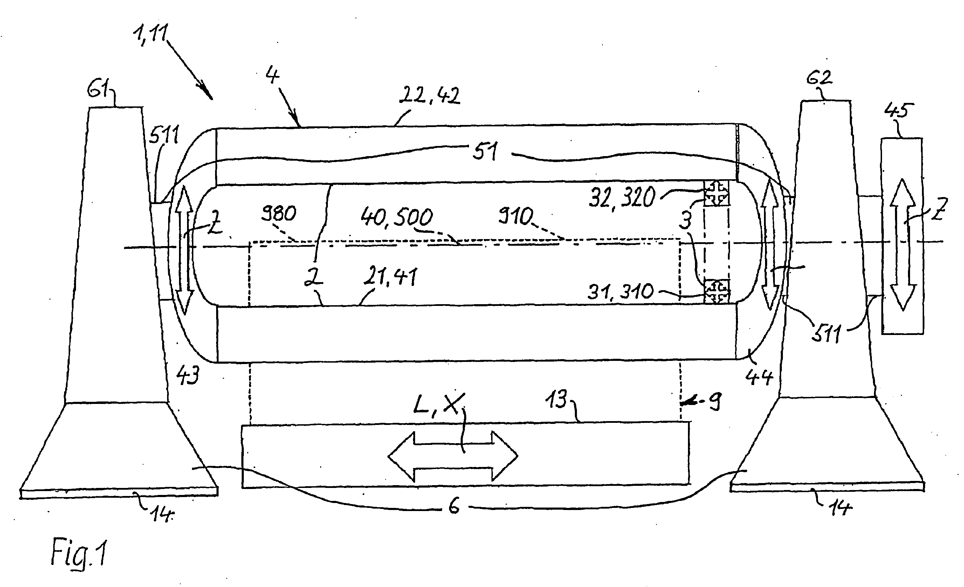

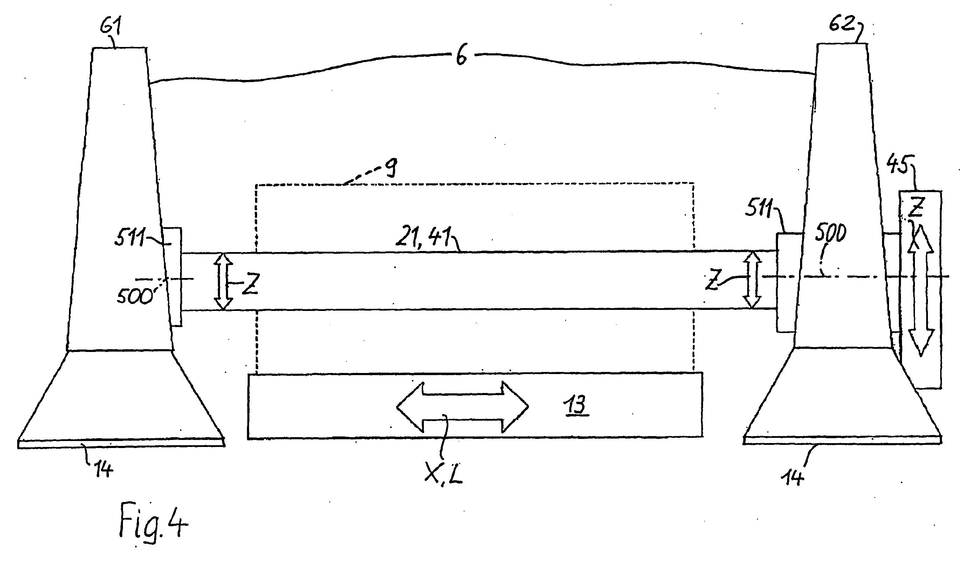

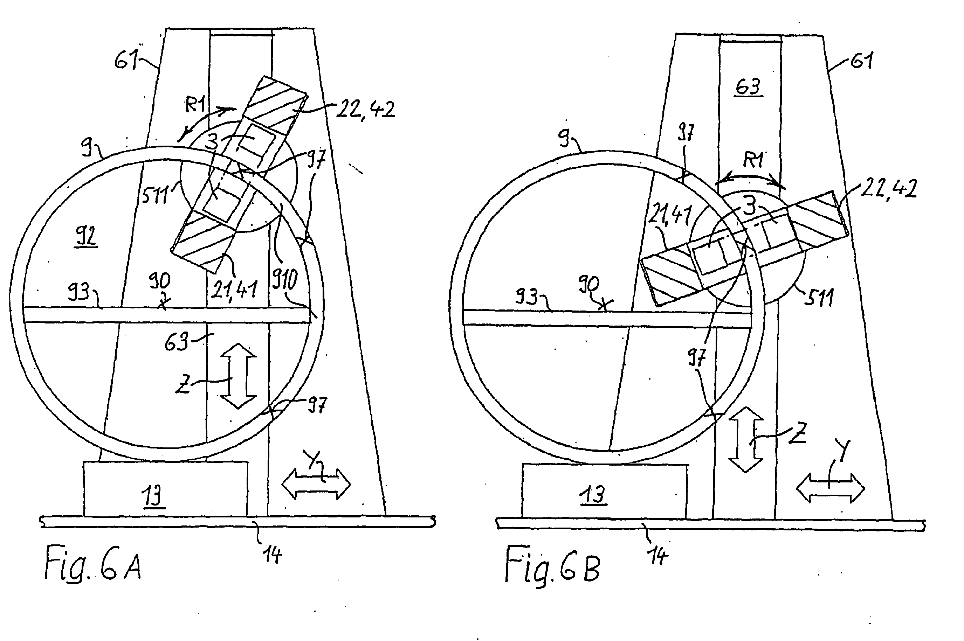

Eine anhand der Fig. 1 bis 6 dargestellte nicht erfindungsgemäße Montageeinrichtung 1, 11 umfaßt ein Gestell 6 mit einem daran gelagerten Werkzeug-Rahmenträger 4. Zwei in Y-Richtung auf Schienen 14 wahlweise separat und gemeinsam verfahrbare Gestellteile sind als in Höhenrichtung Z sich erstreckende Säulen oder Türme 61, 62 ausgebildet. Der Trägerrahmen 4 erstreckt sich in Richtung der dritten kartesischen Koordinate X und ist über Rahmenstege bildende Endstücke 43, 44 in Höhenrichtung Z verschiebbar sowie um eine Mitten- und Symmetrieachse 40 des Rahmenträgers rotatorisch mittels Lagereinrichtung 51 an den Türmen 61, 62 gelagert. Die Montageeinrichtung 11 dient dazu, teil-zylindrische, schalenförmige Längssegmente 910 durch Anbringen von Längs-Nietnähten 97 zu einem umfangsseitig geschlossenen Mantelkörper mit offenen Stirnseiten in Form eines Rumpfes 9 zusammenzufügen, wie dies aus Fig. 6A bis 6C deutlich wird. Dort ist der Rumpf 9 eines Flugzeuges mit kreiszylindrischem Profilquerschnitt ersichtlich. Der Rumpf 9 wird im inneren auf etwa halber Höhe durch einen horizontalen Boden 93 in Oberflur und Unterflur unterteilt. Der Rumpf 9 erstreckt sich mit seiner Zylinderachse 90 in X-Richtung. Die Längsrichtung L der Montageeinrichtung 11 sowie die Längsrichtung des Rumpfes 9 sind gemeinsam durch die X-Richtung bestimmt.

Zur Montage des Rumpfes 9 wird dieser in der in Fig. 6A bis 6C dargestellten Form vorgefertigt und auf einem Bauteilwagen 13, der zum Beispiel längs einer Führung 17 in X-Richtung verfahrbar ist, in noch näher beschriebener Weise in die Montageeinrichtung 11 eingebracht. In diesem Zustand sind Längssegmente 910 - in Fig. 6A bis 6C sind Seitensektionen dargestellt - an ihren Längsrändern überlappend aneinandergeklebt. Um diese Längsverbindung zu vervollkommnen, werden an den Überlappungsstellen die Längs-Nietnähte 97 hergestellt. Solche Nietnähte werden durch paarweise gegeneinander arbeitende, quer zur Körperlängsrichtung L bewegbare Innenwerkzeuge 31 und Außenwerkzeuge 32 in an sich bekannter Weise erzeugt. Arbeits- oder Werkzeugeinheiten umfassen insbesondere Bohr-, Senk-, Dichtungs-, Steck-, Preß- und Gegenhalte-Werkzeuge, die zum Ausfuhren der einzelnen Arbeitsschritte automatisch selektiert, verfahren und aktiviert werden. Zum Beispiel besteht jede in Fig. 6A bis 6C an der Überlappungsstelle der Segmente 910 mit X schematisch dargestellte Nietverbindung aus drei längsparallelen Nietlinien.

Diese Montageeinrichtung 11 umfaßt ein Trägerpaar 2, das durch einen im Hohlraum 92 des Rumpfes 9 sich in X-Richtung erstreckenden, einen Innenwerkzeugwagen 310 verfahrbar führenden inneren Führungsträger 21 sowie durch einen außerhalb des Rumpfes 9 sich in X-Richtung erstreckenden, einen Außenwerkzeugwagen 320 verfahrbar führenden äußeren Führungsträger 22 gebildet ist. Im Beispiel der Fig. 1 bis 6 wird das Trägerpaar 2 durch den Trägerrahmen 4 gebildet. Mit gerader Längskontur 980 des Rumpfes 9 parallele Längsteile 41, 42 des Rahmens 4 bilden die beiden Führungsträger 21, 22, die an ihren stirnseitigen Enden mit den Endstücken 43, 44 kraftschlüssig verbunden sind. Der Rahmen 4 bzw. die Rahmen-Führungsträger 41, 42 sind so lang ausgebildet, daß der Längsweg jedes Werkzeugwagens 310, 320 die volle Länge des zu bearbeitenden Rumpfes 9 erfaßt. Zudem sind die Werkzeugwagen 310, 320 im Paar gegeneinander verfahrbar angeordnet, so daß eine Mehrzahl von Werkzeugen 31, 32 zum Herstellen der Nietnaht 97 von innen bzw. außen an die Mantelwand 91 des Rumpfes 9 heran verfahrbar sind, um dort zum Bearbeiten der Naht mit automatisch selektierten Werkzeugen gegeneinander zu arbeiten. Zu diesem Zweck sind einzelne Werkzeuge 31, 32 lokal auch auf den Werkzeugwagen 310, 320 längs- und querverfahrbar.

Die Rahmen-Lagereinrichtung 51 umfaßt ein Paar von Drehkranz-Lagern 511. Jedes Lager 511 ist am zugehörigen Turm 61, 62 in einer Vertikalnut 63 in Z-Richtung höhenverstellbar und festsetzbar. Um den Trägerrahmen 4 mit den Endstücken 43, 44 zu lagern, werden die beiden Drehkranz- Lager 511 in Z-(Höhen-)Richtung und Y-Richtung in übereinstimmende Positionen gebracht. In jeder Y, Z-Position ist der Rahmen 4 um seine mit der Drehachse 500 der Lagereinrichtung 51 zusammenfallende Mitten-Längsachse 40 drehbar. Entsprechend sind der innere Werkzeug-Führungsträger 21, 41 und der äußere Werkzeug-Führungsträger 22, 42 rotatorisch um ein und dieselbe Längs-Drehachse 500 gelagert. Durch Drehung des Rahmens 4 um die Drehachse 500 sind gegenüberliegende, aufeinander ausgerichtete Werkzeugwagen 310, 320 bzw. im Paar 3 gegenüberliegende Werkzeuge 31, 32 jeweils durch eine einzige Dreh-Verstellbewegung in jede beliebige Drehwinkelposition verfahrbar. In Kombination mit der gemeinsamen Verfahrbarkeit der Türme 61, 62 des Gestells 6 in Y-Richtung sowie der gemeinsamen Höhen-Verfahrbarkeit der Drehkranz-Lager 511 in Z-Richtung ist erreicht, wie dies insbesondere aus Fig. 6A bis 6C ersichtlich ist, daß der Rahmen 4 in jede gewünschte Höhen- bzw. Umfangsposition am Rumpfmantel 91 gebracht werden kann, wobei durch Drehverstellung des Rahmens 4 in Richtung R1 die Werkzeugwagen 310, 320 bzw. deren Werkzeuge 31, 32 in zur Mantelfläche des Rumpfes 9 senkrecht gerichtete Arbeitsrichtung verstellbar sind. Diese Positionierung wird durch die in Y-Richtung, Z-Richtung sowie R1-Richtung eingerichteten separaten, selbstständigen Verstellwege erzielt. Die beiden translatorischen Bewegungen sowie die rotatorische Bewegung werden in der Einrichtung 1 durch automatische Steuerung nach Maßgabe der Größe und Form des Rumpfes 9 sowie des Umfangsorts der anzubringenden Nietnaht vollzogen. In jeder eingestellten Werkzeug-Arbeitsposition werden die Türme 61, 62 bzw. die Lager 511 mit üblichen, nicht dargestellten Mitteln arretiert.

In Fig. 6A bis 6C sind zwei Arbeitspositionen im Oberflur und eine Arbeitsposition im Unterflur des Rumpfes 9 dargestellt. Jeweils wird eine Niet-Verbindungsnaht 9 erzeugt, indem die beiden Werkzeugwagen 310, 320 in den fest eingestellten Positionen der Werkzeug-Führungsträger 41, 42 längs dieser im Paar hin und hergefahren werden, wobei die einzelnen Bearbeitungsvorgänge der paarweise gegeneinander gefübrten Werkzeuge 31, 32 automatisch gesteuert selektiert, aktiviert und ausgeführt werden.

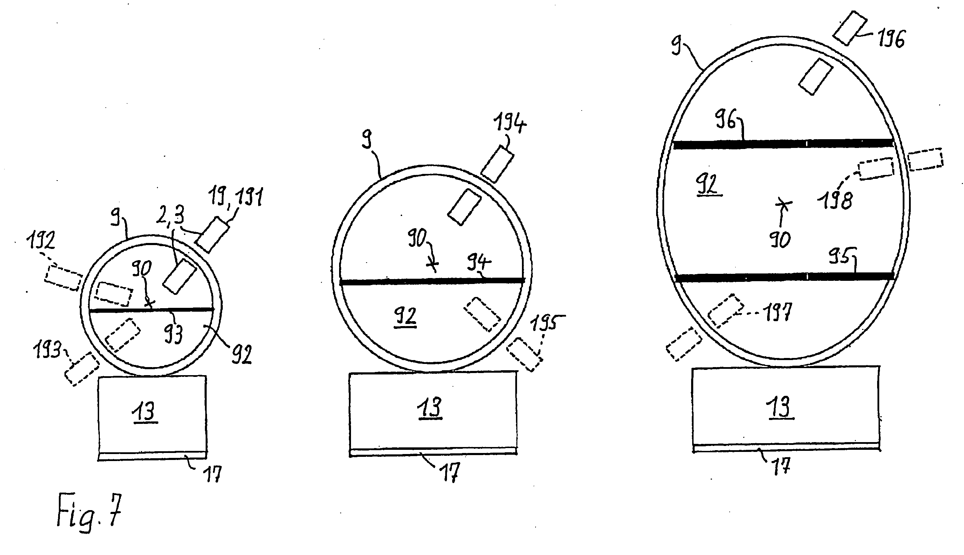

Zur Veranschaulichung universeller Verwendbarkeit der Montageeinrichtung 1 sind in Fig. 7 zylindrische Rümpfe 9 unterschiedlicher Größe und Form mit in wahlweise Bearbeitungspositionen 191 bis 198 gebrachten Führungsträgerpaaren 2 bzw. Werkzeugpaaren 3 dargestellt. Man erkennt, daß sich die Bearbeitungspositionen mit 90°-Werkzeugstellungen zum Beispiel an Rumpfkörpern mit Kreisquerschnitt unterschiedlichster Größe und an im Querschnitt oval-förmigen Mantelkörpern mit ein und derselben Montageeinrichtung 1 einrichten lassen. Zum Beispiel weisen kleinere Rümpfe Durchmesser von unter 4 m und größere Rümpfe Durchmesser von über 7 m auf. Es wird erreicht, daß mit dem erfindungsgemäßen Nietautomat zylindrische Bauteile sowie aber auch von der Zylinderform abweichende Mantelkörper jedes Durchmessers und jeder Form mit Längsnaht an gewünschter Umfangsstelle versehen werden können.

Um ein und dieselbe Montageeinrichtung 1 für ein breites Anwendungsspektrum vorzusehen, wird man die automatisch bewegbaren und verstellbaren Teile der Einrichtung so gestalten und auslegen, daß das Paar 2 der Führungsträger 21, 22 längs eines Mantelumfangsabschnittes versetzbar ist, der einem Umfangswinkel von wenigstens 200° bis 300° entspricht.

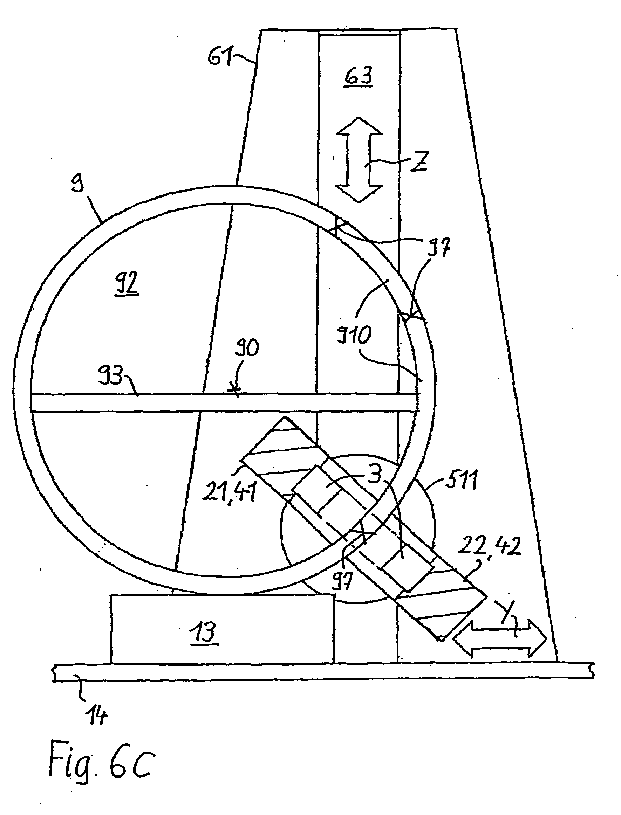

Die in Fig. 6 und 7 dargestellten Rümpfe weisen den mittleren Boden 93 bzw. im Ausführungsbeispiel des Oval-Rumpfes zwei Böden 95, 96 auf. Um die Führungsträger-Paare 2 bzw. die Werkzeugpaare 3 an solchen Rümpfen 9 in jedem Flurbereich in die gewünschte Höhenposition bringen zu können, ist ein Ebenenwechsel vorzunehmen. Zu diesem Zweck muß der Rumpf 9 aus dem Bereich des Trägerpaares 2 bzw. des Rahmens 4 herausgefahren und in den neuen Flurbereich nach Änderung der Höhenposition des Trägerpaares 2 hineingefübrt werden. Dazu erforderliche Maßnahmen, die gleichermaßen vorgesehen werden, um den umfangsseitig vollständig geschlossenen, stirnseitig offenen Rumpf 9 in die Einrichtung 11 hineinzubringen, werden nachstehend beschrieben.

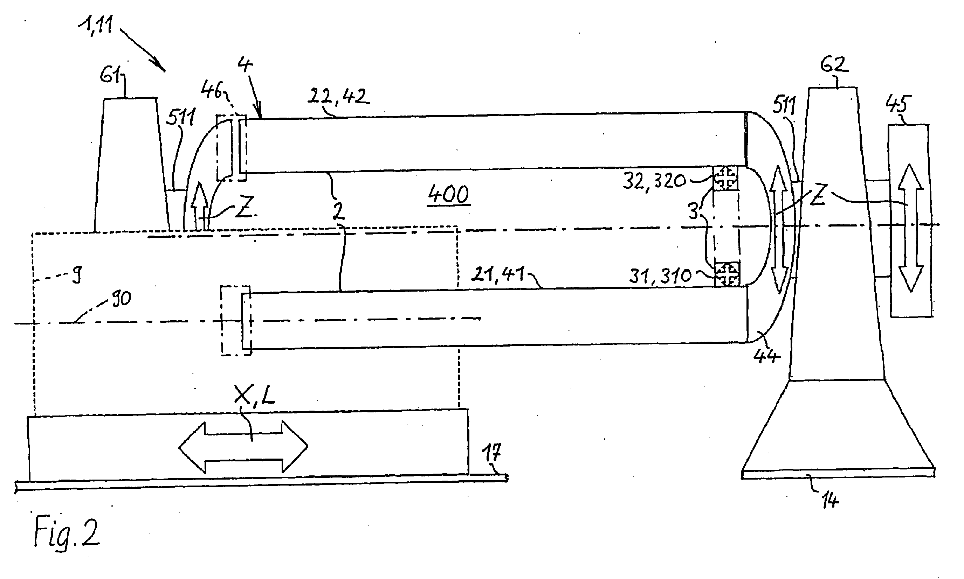

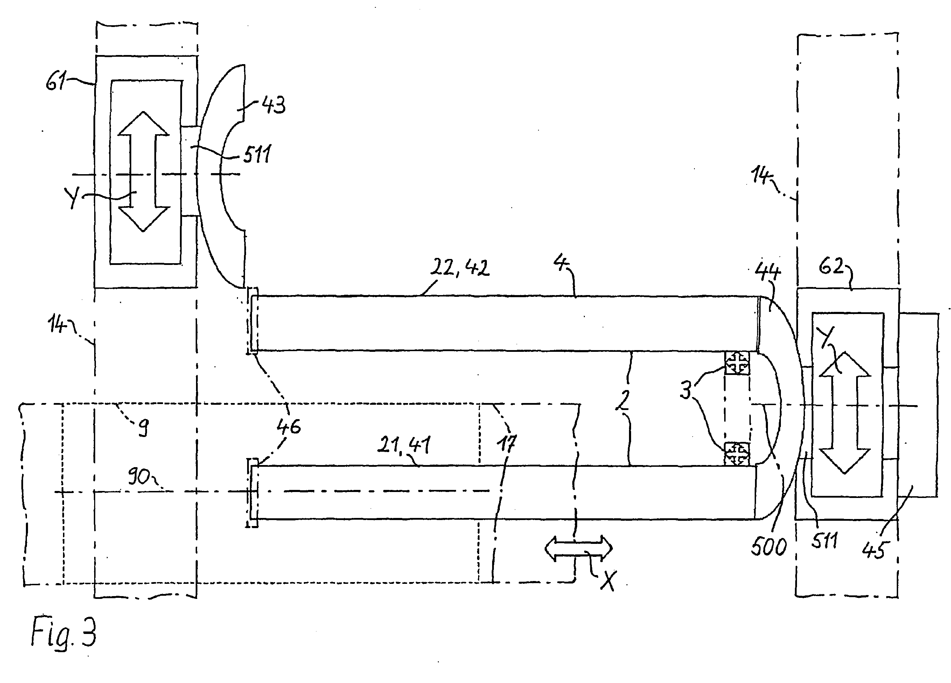

Wie aus Fig. 2 und 3 ersichtlich, ist das Rahmenendstück 43 lösbar an den Rahmen-Führungsträgern 41, 42 angebracht. Das von den Führungsträgern 41, 42 abgekoppelte Endstück 43 wird mittels des Turmes 61 in Y-Richtung verfahren, wobei das Endstück 43 mit dem Lager 511 verbunden bleibt. Zur Befestigung des Endstückes 43 an den Rahmen-Führungssträgern 41, 42 kommt jedes eine kraftschlüssige Verbindung herstellende, lösbare mechanische Verbindungsmittel in Betracht. Dabei wird die Verbindung derart ausgeführt, daß die Türme 61 und 62 in X-Richtung in festem Abstand zueinander angeordnet bleiben.

In Fig. 2 befindet sich der Rahmen 4 mit den Führungsträgern 41, 42 in vertikaler, der Z-Richtung entsprechender Position. Der Turm 61 mit dem von den Trägern 41, 42 entkoppelten Endstück 43 wird in Y-Richtung zurückgefahren, so daß der in langgestreckter U-Form verbleibende Rahmen 4 vor der geöffneten Stirn-Endseite vollkommen frei ist. Der umfangsseitig vollständig geschlossene Rumpf 9, der auf dem Bauteilwagen 13 ruht, wird durch Längsverfahren des Wagens 13 in Richtung X mit seinem Mantel 91 zwischen die Rahmen-Führungsträger 41, 42 gebracht bzw. umgekehrt aus einer solchen Position herausgeführt. In der Draufsicht der Fig. 3 ist der Rahmen 4 in einer der X-Y-Ebene entsprechenden Horizontallage dargestellt. Man erkennt deutlich, daß der Turm 61 mit dem Endstück 43 soweit in Y-Richtung verfahren wird, daß der umfangsseitig geschlossene Rumpf 9 bequem frei über den inneren Werkzeug-Führungsträger 41 bewegbar ist.

Um nach einem Herausfahren des Rumpfes 9 aus dem Bereich des Rahmens 4 die Höhenebene für den inneren Werkzeug-Führungsträger 41 zu ändern, werden die beiden Endstück-Lager 511 an den Türmen 61, 62 in gleichem gewünschtem Maß in Richtung Z in der Höhe verfahren und positioniert. Dabei bleibt die Drehposition des Endstücks 43 und des offenen U-Rahmenteils um die Drehachsen der Lager 511 erhalten, so daß der Rahmen 4 auf einfache Weise wieder dadurch geschlossen wird, daß der Turm 61 in mit dem Turm 62 übereinstimmende Y-Position zurückgefahren wird.

Im Beispiel der Fig. 1 bis 6 ist das in Z-Richtung höhenverfahrbare Drehlager 511 an dem Turm 62 mit einer Gewichtmasse 45 derart verbunden, daß ein das Gewicht des U-Ralimenteils ausgleichendes Gegengewicht wirkt, um den U-Rahmenteil mit günstiger Kraftverteilung am Lager des Turmes 62 in seiner freitragenden Position zu halten.

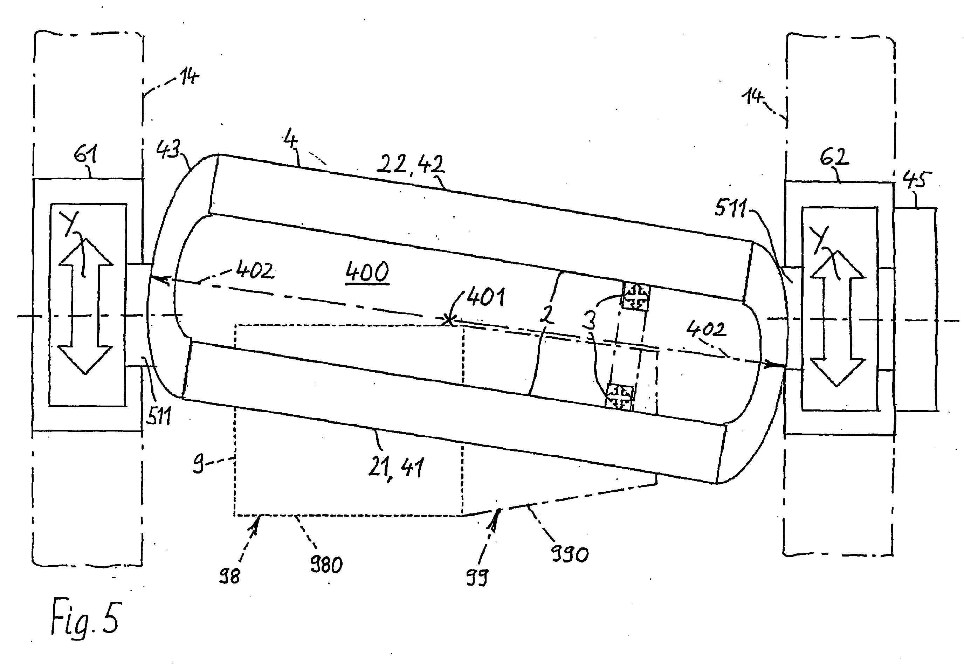

Wie aus der Draufsicht der Fig. 5 ersichtlich, sind die parallelen Werkzeug-Führungsträger 41, 42 des Rahmens 4 in einer Richtung ausgerichtet, die der Längskontur 990 eines konischen Endabschnitts 99 eines Rumpfes 9 entspricht. Das heißt, daß die Führungsträger 41, 42 und die gerade Konturlinie des konischen Abschnittes 99, dessen Kreisdurchmesser zum Ende hin kleiner wird, parallel gerichtet sind. Man erreicht, daß mit der Montageeinrichtung 11 nicht nur Längsnähte an einem geraden Rumpfabschnitt 98 mit parallel zur X-Richtung liegender Kontur 980, sondern auch an einem unter einem Winkel zur X-Richtung liegenden dreidimensionalen räumlichen Abschnitt hergestellt und bearbeitet werden. Zu diesem Zweck ist der ebene Trägerrahmen 4 in einer sämtlichen Teilen 41 bis 44 gemeinsamen Rahmenebene 400 um eine zu dieser senkrechte Mittelachse 401 drehverstellbar angeordnet.

Die Rahmenebene 400 kommt, abhängig von übereinstimmenden Höhenpositionen der Lager 511 in Z-Richtung, in horizontalen Ebenen zu liegen. Jedes Endstück 43, 44 ist an seiner dem Lager 511 zugewandten Seite mit einem konvexen Kreisabschnitt ausgebildet, der durch einen in der Fläche 400 liegenden Radius 402 um die Achse 401 bestimmt ist. Entsprechend ist jedes Lager 511 mit konvexer angepaßter Lagerschale versehen, um das zugehörige Endstück 43, 44 in der Ebene 400 um die Achse 401 drehverschwenkbar aufzunehmen.

Zum Einrichten der an die gerade Schrägkontur angepaßten Position der Träger 41, 42 wird der Rahmen 4 zunächst mit zur X-Richtung paralleler Ausrichtung mit den Türmen 61, 62 in Y-Richtung linear verfahren und mit den senkrecht dazu in Z-Richtung linear verfahrbaren Lagern 511 in die gewünschte Umfangs- und Höhenposition gebracht. Durch Drehung um die Drehachse 500 werden die Werkzeugwagen 310, 320 in der eingestellten Umfangsposition in 90°-Arbeitsstellung zur Wand des Zylinderabschnitts 98 gebracht. Durch Drehung des Rahmens 4 um die Achse 401 erfolgt dann die Parallelausrichtung zur Kontur 990 des Konusabschnitts 99.

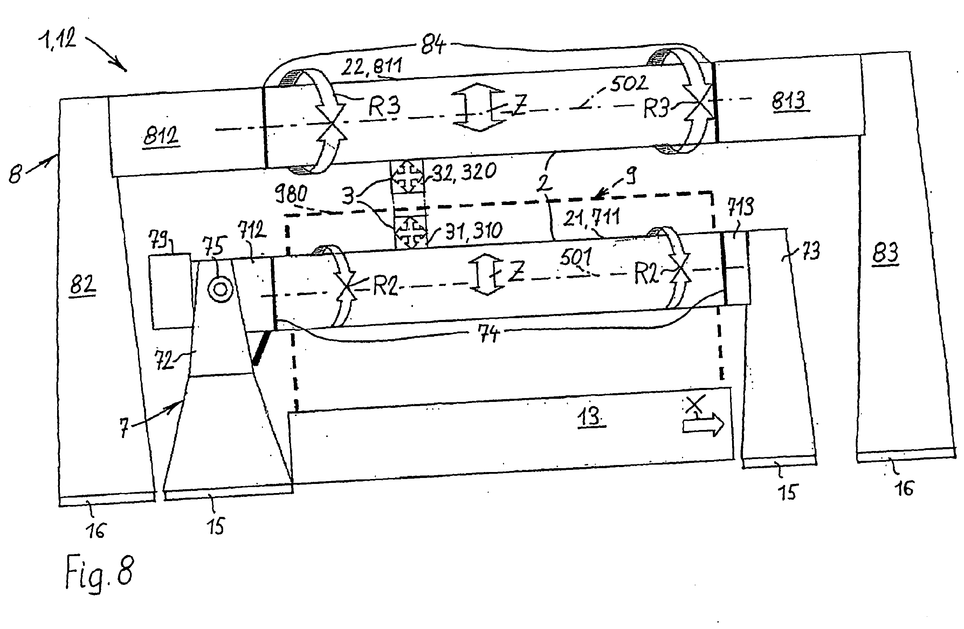

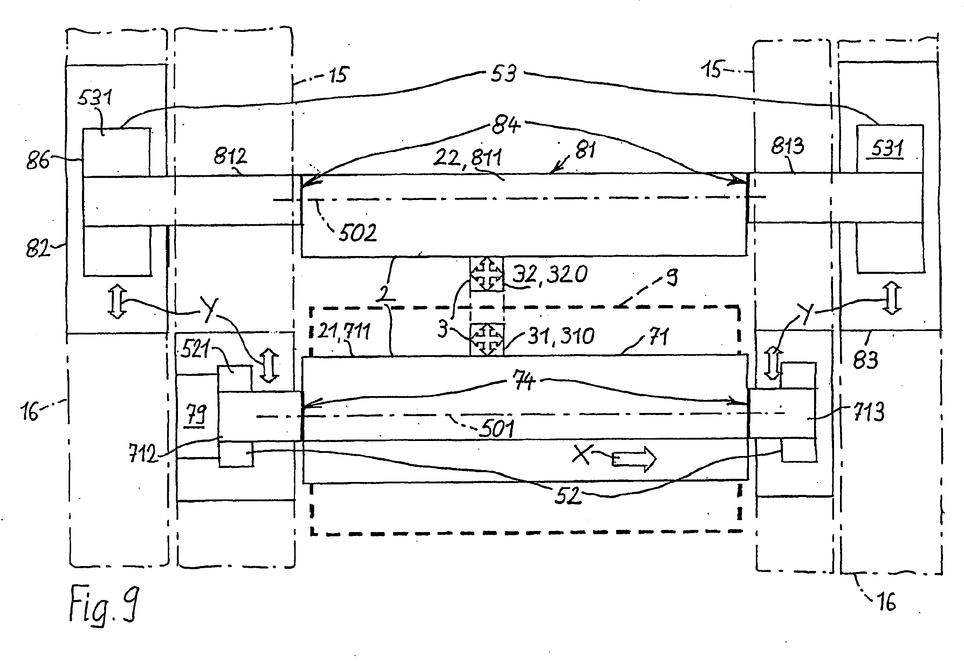

Die Anhand der Fig. 8 bis 13 dargestellte erfindungs-gemäße Montageeinrichtung 1, 12 umfaßt anstelle des Trägerrahmens 4 eine innere Portaleinrichtung 7, die einen inneren Werkzeug-Führungsträger 21 lagert, sowie eine äußere Portaleinrichtung 8, die einen äußeren Werkzeug-Führungsträger 22 lagert. Die innere Portaleinrichtung 7 weist zwei durch Türme 72, 73 gebildete säulenartige Gestellteile auf, die einen Portalträger 71 in Höhenrichtung Z verfahrbar und einstellbar lagern. Der Portalträger 71 ist durch einen den Fübrungsträger 21 bildenden inneren Längsabschnitt 711 sowie endseitig durch Lagerabschnitte 712, 713 gebildet, wobei der Längsabschnitt 711 mittels Drehkranz-Lager 74 um eine Dreh-Längsachse 501 drehbar an den Lagerabschnitten 712 und 713 gelagert ist.

Die äußere Portaleinrichtung 8 ist entsprechend ausgebildet. Sie weist zwei Türme 82, 83 bildende Gestellteile auf, an denen ein Portalträger 81 in Höhenrichtung Z verfahrbar und einstellbar gelagert ist. Der Portalträger 81 ist durch einen inneren, den äußeren Führungsträger 22 bildenden Längsabschnitt 811 sowie Lagerabschnitte 812, 813 an seinen Enden gebildet. Der mittlere Längsabschnitt 811 ist mittels Drehkranz-Lager 84 um eine Längs-Drehachse 502 drehbar an den Endabschnitten 812, 813 gelagert. Die Portaleinrichtungen 7, 8 sind auf Schienen 15 bzw. 16 in Y-Richtung separat verfahrbar.

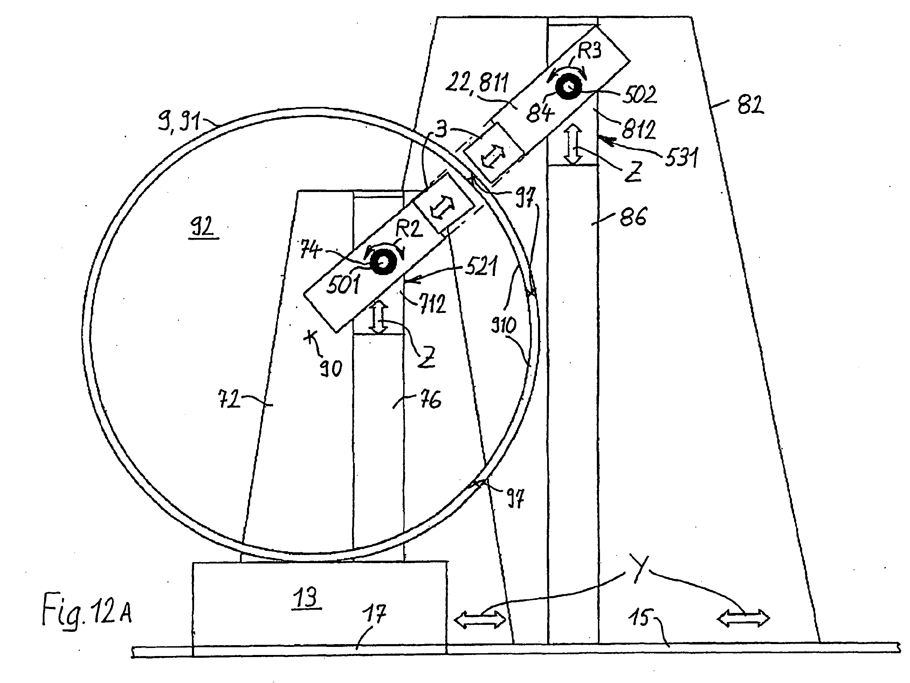

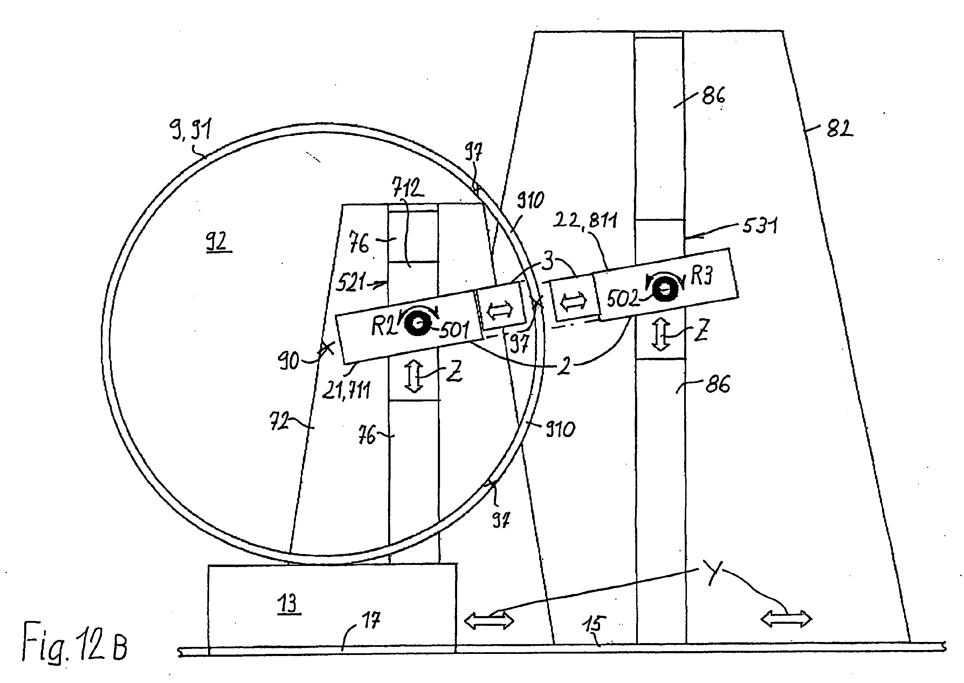

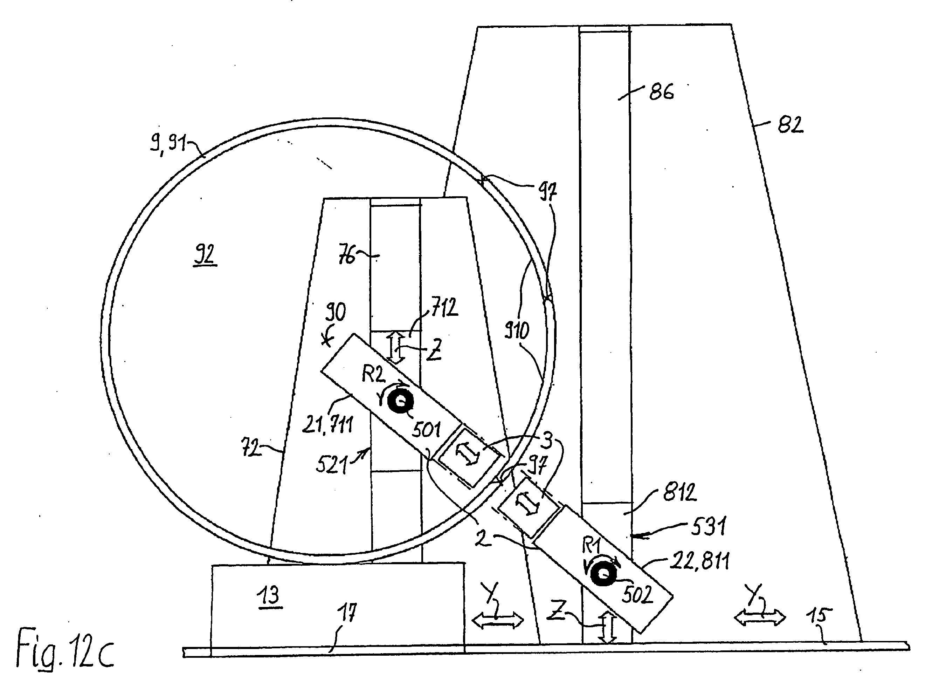

Abgesehen davon, daß in dem Ausführungsbeispiel der Fig. 8 bis 13 die mittleren Portal-Längsabschnitte 711, 811 die mit gerader Längskontur 980 parallelen Führungsträger 21, 22 bilden, bilden diese mit Werkzeugwagen 310, 320 und Werkzeugen 31, 32 ein Werkzeug-Führungsträgerpaar 2 wie in dem zuvor beschriebenen Ausführungsbeispiel. Zum Herstellen von Nietnähten 97 können zum Beispiel die aus Fig. 12A bis 12C hervorgehenden Positionen erreicht und eingestellt werden, die den Positionen in Fig. 6A bis 6C entsprechen. Um eine Arbeitsposition zum Bearbeiten einer Naht 97 einzurichten, werden die Turmpaare 72, 73 und 82, 83 in Y-Richtung separat verfahren und in für die gewünschte Position geeigneten Abstand gebracht. Die Portalträger 71, 81 werden durch lineare Stellbewegung in Z-Richtung in Höhenpositionen gebracht, in denen dann die die Längs-Führungsträger 21, 22 bildenden Längsabschnitte 711, 811 durch Drehbewegung um die Achsen 501, 502 in Richtungen R2, R3 verschwenkt werden, um die Werkzeugwagen 310, 320 mit den Werkzeugen 31, 32 im Paar 3 in einheitlicher Arbeitsrichtung unter einem Winkel von 90° zur zu bearbeitenden Mantelfläche gegeneinander auszurichten.

Die Portalträger-Lagerabschnitte 712, 713 bzw. 812, 813 werden in Lagern 521 bzw. 531 gehalten, die an den Türmen 72, 73 bzw. 82, 83 in vertikalen Lagernuten 712 bzw. 812 in Höhenrichtung Z zum Beispiel mit nicht dargestellten Gewindespindeln verfahrbar und feststellbar sind.

Die Werkzeugwagen 310, 320 können in einem Umfangsbereich von ca. 270° in Arbeitsposition gebracht werden, wobei lediglich der Bereich des den Rumpf 9 lagernden Bauteilwagens 13 ausgespart bleibt. Zum Beispiel lassen sich sämtliche Positionen an den in Größe und Form unterschiedlichen Rümpfen in Fig. 7 einstellen.

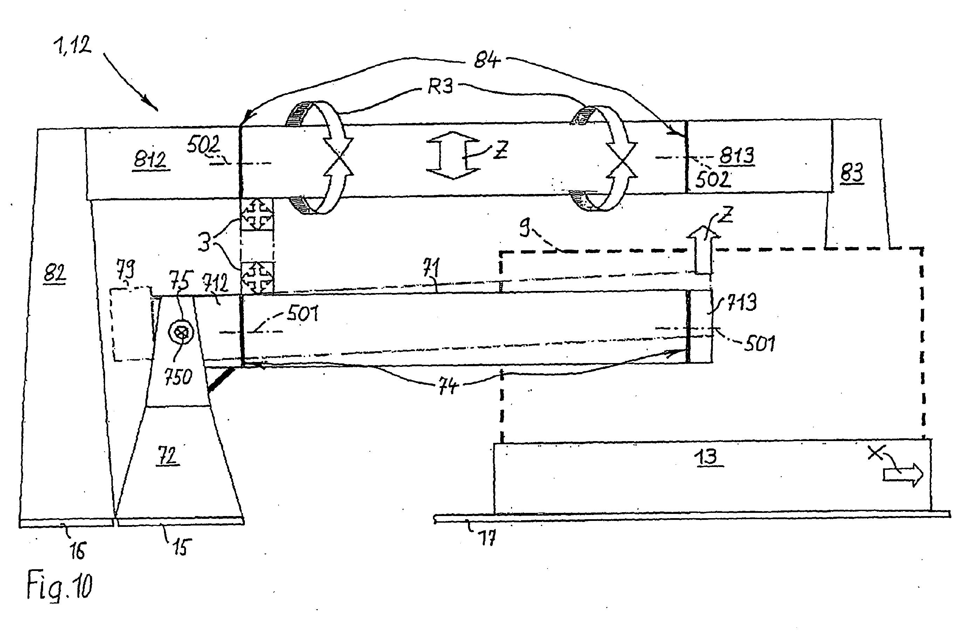

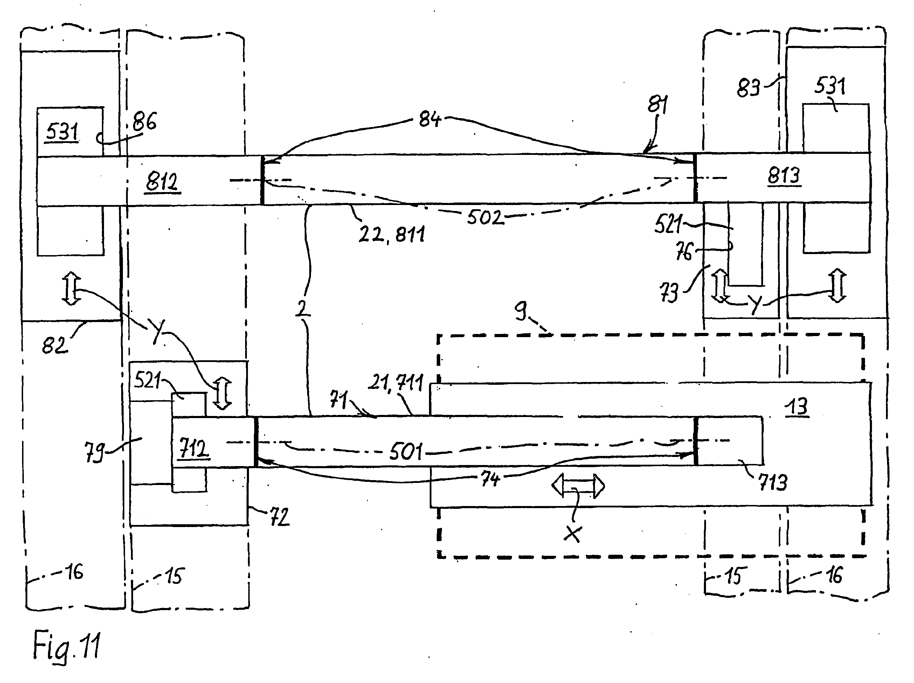

In Fig. 10 und 11 sind im Ausführungsbeispiel Gestaltungen der Montageeinrichtung 12 dargestellt, um die umfangsseitig vollkommen geschlossenen Rumpf-Mantelkörper 9 in die Einrichtung hineinzubringen und daraus zu entnehmen, insbesondere auch verbunden mit dem Aus- und Einfahren eines Rumpfes zum Durchführen eines Werkzeug-Ebenenwechsels zwischen durch Böden 93, 94, 95 getrennten Flurbereichen.

Die innere Portaleinrichtung 7 weist den als Hauptturm vorgesehenen Turm 72 auf. An diese ist der Portalträger 71 mit Schwenklager 75 um eine in Y-Richtung sich erstreckende Achse 750 schwenkbar gelagert. So wird das den Portalträger 71 lagernde Drehlager 521 drehbewegbar um die Achse 750 ausgebildet, wobei die Höhenverstellbarkeit des Lagers 521 am Turm 72 erhalten bleibt.

An seinem anderen Ende ist der Portalbalken 71 mit dem einen Auflageturm bildenden Turm 73 verbunden. Um den stirnseitigen Raum vor dem Portalträger 71 freizugeben, wird der zum Abheben an dem Turm 73 aufliegende Portalträger 71 um wenige Grad, z. B. ca. 5° durch Verschwenken um die Achse 750 in Z-Richtung angehoben. Wie aus Fig. 11 ersichtlich, wird der freigegebene Auflageturm 73 in Y-Richtung in eine hintere Position verfahren. Der innere Portalträger 71 liegt infolgedessen zum Einbringen und Entnehmen eines Rumpfes 9 frei. Zum Ebenenwechsel wird der freiragende Portalträger 71 durch Verfahren des Hauptturmes 72 in Y-Richtung und Verfahren des Lagers 521 an diesem Turm in Z-Richtung in die gewünschte Höhenposition gebracht. Entsprechend wird das Dreh-Auflager 521 für den Portalträger 71 am Auflageturm 73 in die gleiche Höhenposition gefahren, um zum Schließen der Brücke 7 in die dem Turm 72 entsprechende Y-Position gefahren zu werden.

Das Lager 521 am Hauptturm 72 ist mit einer Gewichtsmasse 79 versehen, die ein dem Hebelgewicht des Portalträgers 71 entgegenwirkende Hebelgewicht erzeugt, um den Portalträger 71 in seiner mit geringfügigem Schwenkwinkel hochgeschwenkten Position zu halten, wie dies in Fig. 10 dargestellt ist.

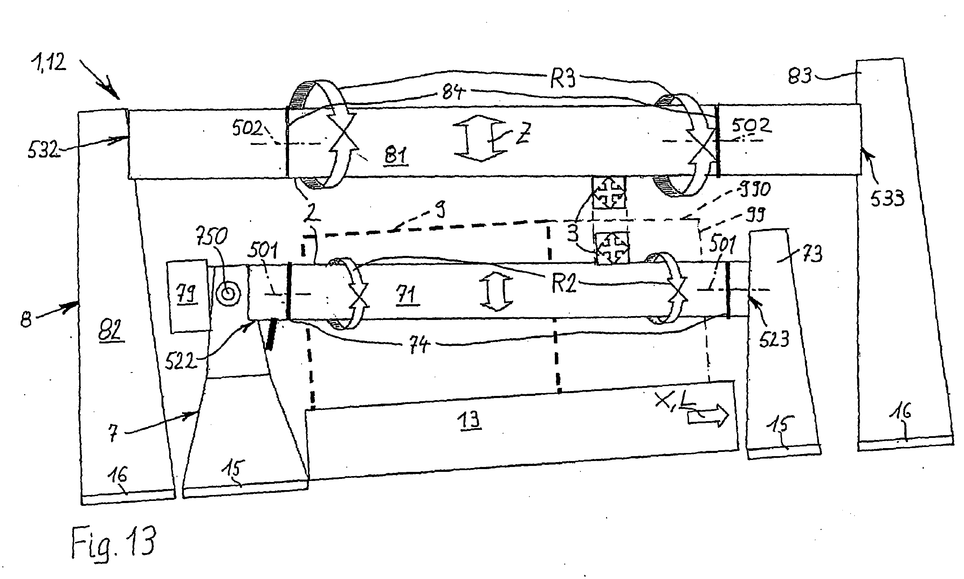

Die die Portaleinrichtungen 7, 8 aufweisende Montageeinrichtung 12 kann zweckmäßig, wie dies im Ausführungsbeispiel der Fig. 13 dargestellt ist, mit zur X-Y-Ebene schräg lagerbaren, parallel ausgerichteten Portalträgern 71, 81 ausgestattet werden, um Längsnahtbearbeitungen auch an zur X-Richtung schräg verlaufender Kontur 990 zum Beispiel eines Konusabschnittes 99 durchzuführen. Zu diesem Zweck kann das Schwenklager 75 der inneren Portaleinrichtung 7 genutzt werden, wobei der Schwenkbereich entsprechend groß vorgesehen wird. Entsprechend wird der äußere Portalträger 81 an seinem Turm 82 mittels eines Festlagers gelagert, das einstellbar eine in Z-Richtung gekippte Trägerposition zuläßt. An dem anderen Turm 83 wird, wie an dem Turm 73 für das Lager 531, ein Auflager bzw. ein Loslager vorgesehen, um die Schrägposition verstellbar einrichten zu können.

Sämtliche Abläufe werden automatisch nach Vorgabe des vorgefertigten, zu bearbeitenden Rumpfes mittels üblicher Maschinensteuerung gesteuert.

## Patentansprüche

1. Montageeinrichtung (12) zum Verbinden von schalenförmigen Mantel-Längssegmenten (910) eines ein Großbauteil bildenden, sich lang erstreckenden, einen Hohlraum (92) mit offener Stirnseite bestimmenden, insbesondere umfangsseitig geschlossenen Mantelkörpers (9) durch Anbringen wenigstens einer Längs-Verbindungsnaht (97) am Körpermantel (91), umfassend wenigstens ein Werkzeugpaar (3), das ein in Längsrichtung (L) des Mantelkörpers (9) innerhalb des Hohlraums (92) verfahrbar geführtes inneres Werkzeug (31) sowie ein in Längsrichtung (L) des Mantelkörpers (9) außerhalb des Hohlraums (92) verfahrbar geführtes äußeres Werkzeug (32) aufweist, wobei die Werkzeuge (31, 32) im Paar (3) in Richtung quer zur Körperlängsrichtung (L) zum Herstellen der Verbindungsnaht (97) zusammenzuwirken, wobei die Montageeinrichtung (1) ein Trägerpaar (2) umfaßt, das durch einen im Hohlraum (92) des Mantelkörpers (9) sich in Körperlängsrichtung (L) erstreckenden, das innere Werkzeug (31) verfahrbar führenden inneren Führungsträger (21) sowie durch einen außerhalb des Mantelkörpers (9) sich in Körperlängsrichtung (L) erstreckenden, das äußere Werkzeug (32) verfahrbar führenden äußeren Führungsträger (22) gebildet ist, wobei jeder Führungsträger (21, 22) um wenigstens eine nach Maßgabe äußerer Längskontur (980, 990) des Mantelkörpers (9) orientierte Längs-Drehachse (500, 501, 502) rotatorisch sowie in wenigstens zwei separate, quer zur Körperlängsrichtung (L) verlaufende Raumrichtungen (Y, Z) verschiebbar derart gelagert und feststellbar ist, daß die zum Herstellen der Verbindungsnaht (97) zusammenwirkenden Werkzeuge (31, 32) im Paar (3) wahlweise unterschiedliche Positionen am Längsumfang des Mantelkörpers (9) einnehmen können, **dadurch geke nnzeichnet**, daß die Montageeinrichtung (12) eine wenigstens einen inneren Führungsträger (21) lagernde innere Portaleinrichtung (7) und eine wenigstens einen äußeren Führungsträger (22) lagernde äußere Portaleinrichtung (8) umfaßt, wobei der innere Führungsträger (21) um eine Längs-Drehachse (501) der inneren Portaleinrichtung (7) und der äußere Führungsträger (22) um eine Längs-Drehachse (502) der äußeren Portaleinrichtung (8) drehverstellbar ist.

2. Montageeinrichtung nach Anspruch 1, **dadurch gekennzeichnet, daß** wenigstens ein Werkzeugpaar (3) zum Herstellen einer Nietverbindung ausgebildet ist.

3. Montageeinrichtung nach Anspruch 2, **dadurch gekennzeichnet, daß** das Werkzeugpaar (3) Nietwerkzeuge (31, 32) umfaßt, die frei von Krafteinleitung in den Mantelkörper (9) Niete setzen.

4. Montageeinrichtung nach einem der Ansprüche 1 bis 3, **dadurch gekennzeichnet, daß** die Montageeinrichtung (1) zum Anbringen wenigstens einer Längs-Verbindungsnaht (97) für die Herstellung eines Mantelkörpers (9) ausgebildet ist, der wenigstens über einen Längsabschnitt (98) zumindest annähernd zylindrische Form aufweist.

5. Montageeinrichtung nach einem der Ansprüche 1 bis 4, **dadurch gekennzeichnet, daß** die Einrichtung zum Anbringen wenigstens einer Längs-Verbindungsnaht (97) für die Herstellung eines Mantelkörpers (9) ausgebildet ist, der wenigstens über einen Längsabschnitt (99), insbesondere einen Endabschnitt, konisch ist.

6. Montageeinrichtung nach einem den Ansprüche 1 bis 5, **dadurch gekennzeichnet, daß** jeder Werkzeug-Führungsträger (31, 32) rotatorisch um zugehörige Längs-Drehachse (501, 502) und translatorisch in zwei separate, senkrecht zueinanderstehende transversale Richtungen (Y, Z) verlagerbar ist, wobei vorzugsweise die eine transversale Richtung (Y) durch eine horizontale Ebene (X-Y) und die andere durch dazu senkrechte Vertikalrichtung (Z) bestimmt sind.

7. Montageeinrichtung nach Anspruch 1, **dadurch gekennzeichnet, daß** wenigstens eine Portaleinrichtung (7,8) einen Portalträger (71,81) aufweist, der durch wenigstens einen einen Führungsträger (21, 22) bildenden inneren Längsabschnitt (711, 811) sowie Lagerabschnitte (712, 713; 812, 813) an seinen Enden gebildet ist.

8. Montageeinrichtung nach Anspruch 1 oder 7, **dadurch gekennzeichnet, daß** jeweils die innere Portaleinrichtung (7) und die äußere Portaleinrichtung (8) zwei säulenartige Gestellteile (72, 73; 82, 83) (7, 8) umfassen, jeweils zwischen denen der zugeordnete Portalträger (71, 81) angeordnet und an denen er gelagert ist, wobei die säulenartigen Gestellteile (72, 73; 82, 83) jeder Portaleinrichtung in wenigstens einer ersten Raumrichtung (Y) quer zur Längsrichtung (L) des Mantelkörpers (9) gemeinsam verfahrbar sowie feststellbar angeordnet sind und Drehlager (521, 522; 531, 532) tragen, die jeweils den Portalträger (71, 81) lagern und in wenigstens einer zweiten Raumrichtung (Z) quer zur Längsrichtung (L) des Mantelkörpers (9) verstellbar sind.

9. Montageeinrichtung nach Anspruch 8, **dadurch gekennzeichnet, daß** an den säulenartigen Gestellteilen (72, 73; 82, 83) von innerer Portalträgereinrichtung (7) und äußerer Portalträgereinrichtung (8) in der Höhe verstellbare und festsetzbare Traglager (76, 86) für die Portalträger (71, 81) derart angeordnet sind, daß die Portalträger (71,81) in Parallellage zueinander wahlweise in wenigstens zwei Positionen versetzbar sind, in denen sie jeweils entsprechend unterschiedlicher äußerer Längskontur (980, 990) des Mantelkörpers (9) ausgerichtet sind.

10. Montageeinrichtung nach einem der Ansprüche 1 oder 7 bis 9, **dadurch gekennzeichnet, daß** die innere Portaleinrichtung (7) säulenartige Gestellteile (72, 73) umfaßt, an denen der innere Portalträger (71) derart lösbar gelagert ist, daß im gelösten Zustand wenigstens ein Gestellteil (13) in eine den stirnseitigen Raum vor dem inneren Portalträger (71) freigebende Position bewegbar ist.

11. Montageeinrichtung nach Anspruch 10*,* **gekennzeichnet durch** die innere Portaleinrichtung (7) mit einem ersten säulenartigen Gestellteil (72), an dem der innere Portalträger (71) in Richtung der Säulenhöhe schwenkbar gelagert ist, sowie mit einem zweiten säulenartigen Gestellteil (73), an dem der innere Portalträger (71) zur Schwenkanhebung abhebbar gelagert ist, um das zweite säulenartige Gestellteil (73) zum Verfahren freizugeben.

12. Montageeinrichtung nach Anspruch 11, **dadurch gekennzeichnet, daß** der äußere Portalträger (71) an seinem schwenkbar gelagerten Ende mit einer Gewichtsmasse (79) versehen ist, die ein den inneren Portalträger (71) an seinem anderen Ende hebendes Hebelgewicht erzeugt.

## Claims

1. An installation device (1) for connecting shell-shaped longitudinal segments (910) of a jacket body (9) that forms a large component that extends longitudinally, that determines a hollow space (92) with an open face, and that is closed in particular on the circumferential side, by placement of at least one longitudinal connection seam (97) on the body jacket (91), said installation device (1) comprising at least one tool pair (3) which comprises an inner tool (31) that is movably guided within the hollow space (92) in longitudinal direction (L) of the jacket body (9), and further comprises an outer tool (32) that is movably guided outside the hollow space (92) in longitudinal direction (L) of the jacket body (9), wherein for the purpose of producing the connection seam (97) the tools (31, 32) act together as a pair (3) in the direction across the longitudinal direction (L) of the body, wherein the installation device (1) comprises a carrier pair (2) which is formed by an inner guide carrier (21) that extends in longitudinal direction (L) of the body and movably guides the inner tool (31) within the hollow space (92) of the jacket body (9), and further comprises an outer guide carrier (22) that extends outside the jacket body (9) in longitudinal direction (L) of the body and movably guides the outer tool (32), wherein each guide carrier (21, 22) is rotatably held according to at least one longitudinal rotary axis (500, 501, 502) oriented by an outer longitudinal contour (980, 990) of the jacket body (9), as well as being slidably held and fastenable in at least two separate spatial directions (Y, Z) that extend across the longitudinal direction (L) of the body, wherein the tools (31, 32), which interact for producing the connection seam (97) as a pair (3) may selectively take up different positions on the longitudinal circumference of the jacket body (9),
**characterized in that**
the installation device (12) comprises an inner portal device (7) that holds at least one inner guide carrier (21), and further comprises at least one outer portal device (8) that holds at least one outer guide carrier (22), wherein the inner guide carrier (21) is rotatably adjustable on a longitudinal rotary axis (501) of the inner portal device (7), while the outer guide carrier (22) is rotatably adjustable on a longitudinal rotary axis (502) of the outer portal device (8).

2. The installation device of claim 1, wherein at least one tool pair (3) is adapted to establish a riveted connection.

3. The installation device of claim 2, wherein the tool pair (3) comprises riveting tools (31, 32) that place rivets into the jacket body (9) free of any force introduction.

4. The installation device of any one of claims 1 to 3, wherein the installation device (1) for the placement of at least one longitudinal connection seam (97) is adapted to produce a jacket body (9) which at least along one longitudinal section (98) is at least approximately cylindrical in shape.

5. The installation device of any one of claims 1 to 4, wherein the device for the placement of at least one longitudinal connection seam (97) is adapted to produce a jacket body (9) which at least along one longitudinal section (99), in particular an end section, is conical.

6. The installation device of any one of claims 1 to 5, wherein each tool guide carrier (31, 32) is rotatably displaceable on associated longitudinal rotary axes (501, 502) and is translative displaceable to and fro manner in two separate transverse directions (Y, Z) that are perpendicular in relation to each other, wherein preferably one transverse direction (Y) is determined by a horizontal plane (X-Y) while the other is determined by a thereto vertical direction (Z).

7. The installation device of claim 1, wherein at least one portal device (7, 8) comprises a portal carrier (71, 81), which is formed by at least one inner longitudinal section (711, 811) that forms a guide carrier (21, 22), as well as by bearing sections (712, 713; 812, 813) at its ends.

8. The installation device of claim 1 or 7, wherein both the inner portal device (7) and the outer portal device (8) comprise two column-like mounting parts (72, 73; 82, 83) (7, 8), between which the associated portal carrier (71, 81) is arranged and on which mounting parts it is held, wherein the column-like mounting parts (72, 73; 82, 83) of each portal device are arranged so as to be mutually movable in at least a first spatial direction (Y) across the longitudinal direction (L) of the jacket body (9) and are arranged so as to be fastenable, and comprise rotary bearings (521, 522; 531, 532) which hold the portal carrier (71, 81) and are adjustable in at least one second spatial direction (Z) across the longitudinal direction (L) of the jacket body (9).

9. The installation device of claim 8, wherein on the column-like mounting parts (72, 73; 82, 83) of the inner portal carrier device (7) and of the outer portal carrier device (8) height-adjustable and arrestable support bearings (76, 86) for the portal carriers (71, 81) are arranged in such a way that said portal carriers (71, 81) in parallel position in relation to each other is selectively movable to at least two positions in which they are aligned according to the varying outside longitudinal contour (980, 990) of the jacket body (9).

10. The installation device of any one of claims 1 or 7 to 9, wherein the inner portal device (7) comprises column-like mounting parts (72, 73) on which the inner portal carrier (71) is detachably held in such a way that in the detached state at least one mounting part (73) is be movable to a position that provides access to a front space in front of the inner portal carrier (71).

11. The installation device of claim 10, wherein the inner portal device (7) is pivotably held to a first column-like mounting part (72), on which the inner portal carrier (71) is pivotably held in the direction of the column height, as well as being held to a second column-like mounting part (73) on which for pivoted lifting the inner portal carrier (71) is liftably held in order to release the second column-like mounting part (73) for displacement.

12. The installation device of claim 11, wherein at its pivotably held end the outer portal carrier (71) comprises a weight mass (79) which generates a lever weight that lifts the other end of the inner portal carrier (71).

## Revendications

1. Dispositif de montage (12) pour l'assemblage de segments longitudinaux d'enveloppe (910) en forme de coques d'un corps d'enveloppe (9), fermé en particulier du côté périphérique, qui forme un grand composant, s'étend en longueur, et définit un espace creux (92) avec un côté frontal ouvert, par pose d'au moins un joint d'assemblage longitudinal (97) sur l'enveloppe de corps (91), comprenant au moins une paire d'outils (3), qui présente un outil intérieur (31) guidé mobile dans la direction longitudinale (L) du corps d'enveloppe (9) à l'intérieur de l'espace creux (92), ainsi qu'un outil extérieur (32) guidé mobile dans la direction longitudinale (L) du corps d'enveloppe (9) à l'extérieur de l'espace creux (92), dispositif de montage dans lequel les outils (31, 32) coopèrent par paire (3) dans la direction transversale à la direction longitudinale (L) du corps pour créer le joint d'assemblage (97), le dispositif de montage (1) comporte une paire de supports (2), qui est formée par un support de guidage (21) intérieur, s'étendant dans l'espace creux (92) du corps d'enveloppe (9) dans la direction longitudinale (L) du corps et guidant mobile l'outil intérieur (31), ainsi que par un support de guidage (22) extérieur, s'étendant à l'extérieur du corps d'enveloppe (9) dans la direction longitudinale (L) du corps et guidant mobile l'outil extérieur (32), chaque support de guidage (21, 22) peut être monté et fixé avec une possibilité de rotation autour d'au moins un axe de rotation longitudinal (500, 501, 502) orienté selon le contour longitudinal extérieur (980, 990) du corps d'enveloppe (9), ainsi qu'avec une possibilité de déplacement dans au moins deux directions spatiales séparées (Y, Z), transversales à la direction longitudinale (L) du corps, de telle sorte que les outils (31, 32), coopérant pour créer le joint d'assemblage (97), peuvent occuper sélectivement par paire (3) différentes positions sur le pourtour longitudinal du corps d'enveloppe (9), **caractérisé en ce que** le dispositif de montage (12) comporte un portique intérieur (7), logeant au moins un support de guidage intérieur (21), et un portique extérieur (8), logeant au moins un support de guidage extérieur (22), le support de guidage intérieur (21) étant réglable en rotation autour d'un axe de rotation longitudinal (501) du portique intérieur (7) et le support de guidage extérieur (22) étant réglable en rotation autour d'un axe de rotation longitudinal (502) du portique extérieur (8).

2. Dispositif de montage suivant la revendication 1, **caractérisé en ce qu'**au moins une paire d'outils (3) est réalisée pour créer un rivetage.

3. Dispositif de montage suivant la revendication 2, **caractérisé en ce que** la paire d'outils (3) comporte des outils de rivetage (31, 32), qui posent des rivets sans transmission de forces dans le corps d'enveloppe (9).

4. Dispositif de montage suivant l'une des revendications 1 à 3, **caractérisé en ce que** le dispositif de montage (1) est réalisé pour la pose d'au moins un joint d'assemblage longitudinal (97) destiné à créer un corps d'enveloppe (9), lequel corps présente une forme au moins approximativement cylindrique au moins sur une section longitudinale (98).

5. Dispositif de montage suivant l'une des revendications 1 à 4, **caractérisé en ce que** le dispositif est réalisé pour la pose d'au moins un joint d'assemblage longitudinal (97) destiné à créer un corps d'enveloppe (9), lequel corps est conique au moins sur une section longitudinale (99), en particulier une section extrême.

6. Dispositif de montage suivant l'une des revendications 1 à 5, **caractérisé en ce que** chaque support de guidage d'outil (31, 32) est mobile en rotation autour d'un axe de rotation longitudinal correspondant (501, 502) et mobile en translation dans deux directions transversales (Y, Z) séparées, perpendiculaires l'une à l'autre, l'une des directions transversales (Y) étant de préférence définie par un plan horizontal (X - Y) et l'autre direction étant définie par une direction verticale (Z) perpendiculaire à ce dernier.

7. Dispositif de montage suivant la revendication 1, **caractérisé en ce qu'**au moins un portique (7, 8) présente un support de portique (71, 81), qui est formé sur ses extrémités par au moins une section longitudinale intérieure (711, 811), formant un support de guidage (21, 22), ainsi que par des sections de paliers (712, 713 ; 812, 813).

8. Dispositif de montage suivant l'une des revendications 1 et 7, **caractérisé en ce que** le portique intérieur (7) et le portique extérieur (8) comportent respectivement deux parties de bâti en forme de colonne (72, 73 ; 82, 83) (7, 8), entre lesquelles est respectivement disposé le support de portique (71, 81) associé et monté sur ces dernières, les parties de bâti (72, 73 ; 82, 83) en forme de colonne de chaque portique étant disposées avec une possibilité de déplacement ainsi que de fixation conjointe dans au moins une première direction spatiale (Y) transversale à la direction longitudinale (L) du corps d'enveloppe (9) et supportant des coussinets de pivotement (521, 522 ; 531, 532), qui logent chacun le support de portique (71, 81) et sont déplaçables dans au moins une seconde direction spatiale (Z)) transversale à la direction longitudinale (L) du corps d'enveloppe (9).

9. Dispositif de montage suivant la revendication 8, **caractérisé en ce que**, sur les parties de bâti (72, 73 ; 82, 83) en forme de colonne du portique intérieur (7) et du portique extérieur (8), des paliers d'appui (76, 86), pouvant être réglés et fixés en hauteur, sont disposés pour les supports de portique (71, 81) de telle sorte que les supports de portique (71, 81) peuvent être déplacés sélectivement dans au moins deux positions en position parallèle l'un par rapport à l'autre, positions dans lesquelles ils sont respectivement orientés suivant le contour longitudinal extérieur différent (980, 990) du corps d'enveloppe (9).

10. Dispositif de montage suivant l'une des revendications 1 ou 7 à 9, **caractérisé en ce que** le portique intérieur (7) comporte des parties de bâti (72, 73) en forme de colonne, sur lesquelles est monté de façon amovible le support de portique intérieur (71) de telle sorte que, dans l'état de desserrage, au moins une partie de bâti (73) est déplaçable dans une position dégageant l'espace du côté frontal situé devant le support de portique intérieur (71).

11. Dispositif de montage suivant la revendication 10, **caractérisé par** le portique intérieur (7) avec une première partie de bâti (72) en forme de colonne, sur laquelle est monté pivotant le support de portique intérieur (71) en direction de la hauteur de colonne, ainsi qu'avec une seconde partie de bâti (73) en forme de colonne, sur laquelle est monté le support de portique intérieur (71) avec une possibilité de relevage pour le relèvement pivotant, afin de libérer la seconde partie de bâti (73) en forme de colonne pour le déplacement.

12. Dispositif de montage suivant la revendication 11, **caractérisé en ce que** le support de portique extérieur (71) est muni sur son extrémité montée pivotante d'une masse pondérale (79), qui produit un poids de levier levant le support de portique intérieur (71) sur son autre extrémité.
